# EUROPÄISCHE PATENTANMELDUNG

(11) **EP 1 013 354 A1**
(43) Veröffentlichungstag der Anmeldung: **28.06.2000**
(21) Anmeldenummer: 99124597.8
(22) Anmeldetag: 10.12.1999
(51) Int. Cl.: B21D 39/03, B23P 11/00

(54) **Verfahren zum Fügen durch Umformen unter Nutzung der Widerstandserwärmung**

(30) Priorität: 16.12.1998 DE 19858060
(71) Anmelder: Messer Cutting & Welding AG, 64823 Gross-Umstadt (DE); David + Baader GmbH, 76870 Kandel (DE)
(72) Erfinder: Böhmert, Eugen, 80687 München (DE); Bytzek, Dietmar, 76726 Germersheim (DE)
(74) Vertreter: Berdux, Klaus, Dipl.-Ing.

(57) **Zusammenfassung**

Die Erfindung betrifft ein Verfahren zum Fügen durch Umformen unter Nutzung der Widerstandserwärmung, insbesondere zur Herstellung von Fügeverbindungen bei der Kleinteilefertigung in der Feinwerk- und Elektrotechnik, bei dem die miteinander zu verbindenden, überlappt angeordneten Fügeteile mit Hilfe eines aus Stempel, Niederhalter und Matrize bestehenden Fügewerkzeuges und mit oder ohne Verwendung eines Hilfsfügeteils in Form einer Niet, durch Kontakt mit vorgewärmten Werkzeugteilen oder durch berührungslose Wärmezufuhr bis zur lokalen plastischen Unformbarkeit erhitzt und anschließend umgeformt werden.
Erfindungsgemäß ist dadurch, daß durch einen zwischen Elektroden (5, 6) angeordneten Fügeteilen hindurch fließenden elektrischen Strom, über den elektrischen Stoffwiderstand in den Fügeteilen eine Wärme erzeugt wird, die zusammen mit einer durch die Elektroden (5, 6) auf die Fügeteile einwirkenden mechanischen Kraft, die Fügeteile zu einer Fügeverbindung umformt, ein mittels Widerstandsschweißanlage durchführbares Fügeverfahren mit einer hohen Wirtschaftlichkeit gegeben.

## Beschreibung

Die Erfindung betrifft ein Verfahren zum Fügen durch Umformen unter Nutzung der Widerstandserwärmung, insbesondere zur Herstellung von Fügeverbindungen bei der Kleinteilefertigung in der Feinwerk- und Elektrotechnik, nach dem Oberbegriff des Anspruchs 1.

Durch die DE 196 30 488 A1 ist ein Verfahren zur Herstellung von thermischen Fügeverbindungen, insbesondere zum Stanznieten oder zum Durchsetzfügen bekannt, bei dem die Fügeflächen der überlappt und mit oder ohne Hilfsfügeteil in Form einer Niet angeordneten Fügeteile stempel- und /oder matrizenseitig entweder durch Kontakt mit vorgewärmten Werkzeugteilen oder ohne Kontakt induktiv derart erwärmt werden, daß sie ein für den lokalen Umformprozeß ausreichendes Formänderungsvermögen aufweisen. Vorzugsweise sind die bei den Werkzeugen erforderlichen Niederhaltesysteme beheizt. Zusätzlich kann das Durchsetzfügen und Stanznieten zu einem Verkleben der Bauteile Verwendung finden, so daß eine kombiniert gefügte Verbindung entsteht. Diese bekannte, speziell für Fügeverbindungen von schwer umformbaren Werkstoffen, wie Magnesium, halbharten Aluminiumwerkstoffen und Kunststoffen eingesetzte thermische Fügeverfahren ist für die, durch hohe Arbeitsgeschwindigkeiten und niedrigen Energiebedarf geprägte Kleinteilefertigung in der Feinwerk- und Elektrotechnik ungeeignet.

In der Patentschrift DE 39 32 294 C1 ist des weiteren ein Umformwerkzeug aufgezeigt, das zum Umformen des Ende eines Nietschaftes oder eines Steges zu einem Nietkopf bzw. zu einem Bund, einen induktiv beheiz- und kühlbaren Döpper aufweist, wobei die Induktionsspule um den Döpper herum an seinem nietseitigen bzw. stegseitigen Endbereich angeordnet ist. Bei Verwendung von Kunststoffnieten ist zusätzlich ein mit Hochfrequenz betriebener Kondensator parallel zur Spule um den herausragenden Bereich des Niedschaftes angeordnet, wobei die Vernietung mittels Kunststoffnieten mit oder ohne Beheizung des Döppers erfolgt. Auch dieses bekannte Umformwerkzeug ist aufgrund der eingesetzten Heizungsart und -ausbildung aus den gleichen Gründen wie das durch DE 196 30 488 A1 bekannte Fügeverfahren für die Kleinteilefertigung in der Feinwerk- und Elektrotechnik nicht geeignet.

Aufgabe der Erfindung ist es daher, ein durch hohe Arbeitsgeschwindigkeiten und geringen Energieverbrauch gekennzeichnetes, wirtschaftliches Verfahren zur Herstellung von, ständig wechselnden mechanischen Einflüssen und Temperatureinflüssen unterliegenden Kleinteilen in der Feinwerk- und Elektrotechnik zu schaffen, welches die Herstellung von eine hohe Verbindungsfestigkeit und geringe Übergangswiderstände aufweisenden Fügeverbindungen gewährleistet.

Diese Aufgabe wird mit dem erfindungsgemäßen Verfahren dadurch gelöst, daß durch einen zwischen Elektroden angeordneten Fügeteilen hindurch fließenden elektrischen Strom, über den elektrischen Stoffwiderstand, in den Fügeteilen eine Wärme erzeugt wird, die zusammen mit einer durch die Elektroden auf die Fügeteile einwirkenden mechanischen Kraft, die Fügeteile zu einer Fügeverbindung umformt.

Erfindungsgemäß wird in dem als erstes Fügeteil eingesetzten, in der Regel härteren, elektrischen Anschlußteil eine Düse geformt.
Anschließend wird in dem als weiteres Fügeteil eingesetzten, in der Regel aus einem weicheren Werkstoff bestehenden, elektrischen Kontaktteil eine die Düse aufnehmende Bohrung ausgestanzt.

Diese derart zum Fügen durch Umformen vorbereiteten Fügeteile werden nunmehr in Düsen-Bohrungs-Anordnung auf die anstelle einer Matrize als Bestandteil einer elektrischen Widerstandsschweißanlage vorhandenen Elektrode angeordnet.
Danach wird die anstelle eines Stempels eingesetzte und mit einem zweckentsprechend ausgebildeten und angeordneten Elektrodenkopf versehene Elektrode der Widerstandsschweißanlage in Richtung der auf der Matrizen-Elektrode gelagerten Fügeteile verfahren, bis die Düse des elektrischen Anschlußteils kontaktiert wird. Der nunmehr zwischen der Stempel-Elektrode und der Matrizen-Elektrode durch die Fügeteile hindurch fließende elektrische Strom bewirkt durch den elektrischen Stoffwiderstand eine Erwärmung der Fügeteile, so daß sich die Düse des elektrischen Anschlußteils durch die beim anschließenden Weiterverfahren der Stempel-Elektrode in Richtung zur Matrizen-Elektrode auf die Fügeteile entstehende Druckeinwirkung mit geringem Kraftaufwand und niedrigem Energiebedarf bei hoher Arbeitsgeschwindigkeit unter Ausbildung einer unlöslichen Fügeverbindung umformen läßt.

Entsprechend den geforderten Festigkeitswerten an die Fügeverbindung finden unterschiedliche Düsenformen Verwendung. Dabei kann die herkömmliche runde Düsenform durch eine ovale oder eine sonstige anderweitige Düsenform ersetzt werden.

Die Wirtschaftlichkeit des erfindungsgemäßen Fügeverfahrens ist dadurch gegeben, daß es sich um ein schnelles Fügeverfahren mit geringem Energiebedarf und damit niedrigen Betriebskosten handelt. Aufgrund dieser betriebswirtschaftlichen Vorzüge findet die Erfindung, insbesondere auch bei der Massenfertigung von Kleinteilen in der Feinwerk- und Elektrotechnik vorteilhaft Anwendung, speziell auch bei der Herstellung von thermisch und mechanisch belastbaren, geringe elektrische Übergangswiderstände aufweisende und eine hohe Einsatzdauer gewährleistende Fügeverbindungen in elektrischen Heizungen von Kraftfahrzeugen, Verwendung.

Die Erfindung wird nachfolgend anhand des in der Zeichnung dargestellten bevorzugten Ausführungsbeispiels näher erläutert.
In der Zeichnung zeigt:
Fig. 1 eine schematische erfindungsgemäße Elektroden-Anordnung einer Widerstandsschweißanlage mit einem zur Bearbeitung auf der anstelle einer Matrize vorhandenen Elektrode angeordneten elektrischen Anschluß-/Kontaktteil;
Fig. 2 die schematische erfindungsgemäße Elektroden-Anordnung der Widerstandsschweißanlage mit der durch Düsen-Umformen gefertigten Fügeverbindung;
Fig. 3 in schematischer Draufsicht die erfindungsgemäße Fügeverbindung.

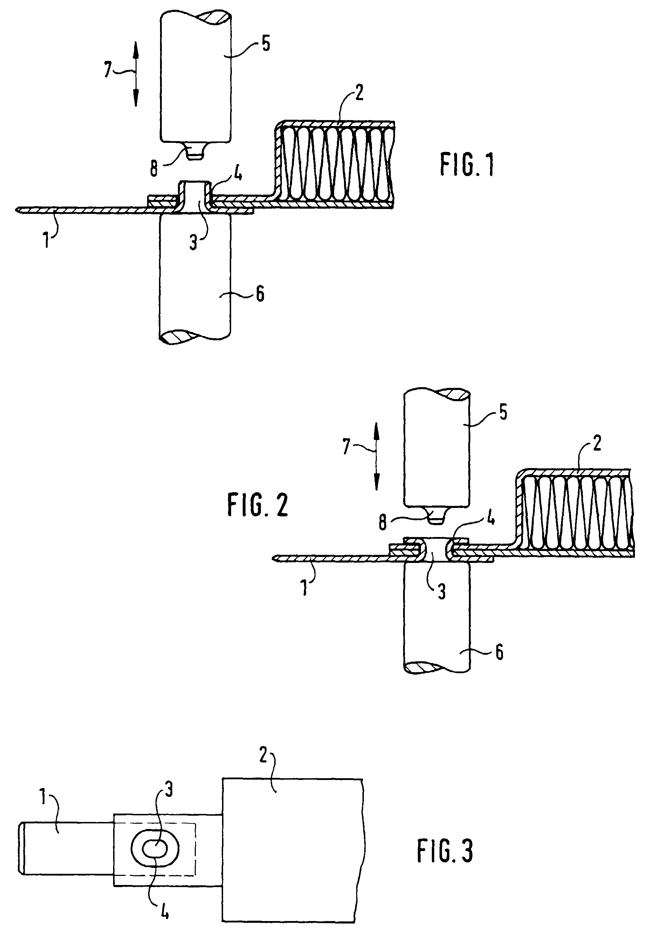

Die in den Fig. 1 und 2 dargestellten Fügeteile, bestehen aus ein elektrisches Anschlußteil 1 mit einer als Nietschaft ausgebildeten Düse 3 und ein mit einer die Düse 3 aufnehmenden Bohrung 4 versehenes elektrisches Kontaktteil 2, welche zwischen einer anstelle eines Stempels eingesetzten, mit einem stirnseitigen Elektrodenkopf 8 ausgebildeten und in Bewegungsrichtung 7 bewegbaren Elektrode 5 einer elektrischen Widerstandschweißmaschine und einer anstelle einer Matrize verwendeten, zur Lagerung der zu bearbeitenden Fügeteile eingesetzten Elektrode 6 der elektrischen Widerstandsschweißanlage gelagert sind. Beim vertikalen Verfahren der Elektrode 5 in Bewegungsrichtung 7 fließt beim Kontaktieren des Elektrodenkopfes 8 der Elektrode 5 mit der Düse 3 des elektrischen Anschlußteiles 1 ein elektrischer Strom zwischen den beiden Elektroden 5, 6 durch die Fügeteile, wodurch über den Stoffwiderstand der Fügeteile die Düse 3 des elektrischen Anschlußteils 1 derart erwärmt wird, daß sie beim weiteren Verfahren der Elektrode 5 in Bewegungsrichtung 7 durch die nunmehr zusätzlich auf die Fügeteile einwirkende mechanische Kraft derart umgeformt wird, daß die in Fig. 3 dargestellte unlösliche Fügeverbindung entsteht. Die in der Fig. 3 dargestellte ovale Form der in der ovalen Bohrung 4 des elektrischen Kontaktteiles 2 angeordneten Düse 3 des elektrischen Anschlußteiles 1 findet bei gegen Verdrehung kraftschlüssig gesicherten Fügeverbindungen Verwendung. Selbstverständlich gelangen auch runde Düsen 3 oder anderweitige Düsenformen entsprechend der an die jeweilige Fügeverbindung gestellten speziellen Festigkeitsanforderungen zur Anwendung .

### Bezugszeichen-Aufstellung

- 1: elektrisches Anschlußteil
- 2: elektrisches Kontaktteil
- 3: Düse
- 4: Bohrung
- 5: Elektrode
- 6: Elektrode
- 7: Bewegungsrichtung
- 8: Elektrodenkopf

## Patentansprüche

1. Verfahren zum Fügen durch Umformen unter Nutzung der Widerstandserwärmung, insbesondere zur Herstellung von Fügeverbindungen bei der Kleinteilefertigung in der Feinwerk- und Elektrotechnik, bei dem die miteinander zu verbindenden, überlappt angeordneten Fügeteile mit Hilfe eines aus Stempel, Niederhalter und Matrize bestehenden Fügewerkzeuges und mit oder ohne Verwendung eines Hilfsfügeteils in Form einer Niet, durch Kontakt mit vorgewärmten Werkzeugteilen oder durch berührungslose Wärmezufuhr bis zur lokalen plastischen Umformbarkeit erhitzt und anschließend umgeformt werden,
dadurch gekennzeichnet,
daß durch einen zwischen Elektroden (5, 6) angeordneten Fügeteilen hindurch fließenden elektrischen Strom, über den elektrischen Stoffwiderstand in den Fügeteilen eine Wärme erzeugt wird, die zusammen mit einer durch die Elektroden (5, 6) auf die Fügeteile einwirkenden mechanischen Kraft, die Fügeteile zu einer Fügeverbindung umformt.

2. Verfahren nach Anspruch 1,
dadurch gekennzeichnet,
daß im als erstes Fügeteil verwendeten elektrischen Anschlußteil (1) eine Düse (3) geformt wird.

3. Verfahren nach Anspruch 1 oder 2,
dadurch gekennzeichnet,
daß anschließend im als weiteres Fügeteil verwendeten elektrischen Kontaktteil (2) eine die Düse (3) des Anschlußteils (1) aufnehmende Bohrung (4) ausgestanzt wird.

4. Verfahren nach einem der Ansprüche 1 bis 3,
dadurch gekennzeichnet,
daß nach dem Ausstanzen der Bohrung (4) im elektrischen Kontaktteil (2) das elektrische Anschlußteil (1) zusammen mit dem elektrischen Kontaktteil (2) zwischen einer anstelle einer als Stempel eingesetzten Elektrode (5) und einer anstelle einer Matrize eingesetzten Elektrode (6) einer elektrischen Widerstandsschweißanlage auf der Elektrode (6) angeordnet wird.

5. Verfahren nach einem der Ansprüche 1 bis 4,
dadurch gekennzeichnet,
daß nunmehr die, mit einem stirnseitig angeordneten und entsprechend der Form der Düse (3) ausgebildeten Elektrodenkopf (8) versehene Elektrode (5) in Bewegungsrichtung (7) zu den auf der Elektrode (6) lagernden Fügeteilen verfahren wird.

6. Verfahren nach einem der Ansprüche 1 bis 5,
dadurch gekennzeichnet,
daß beim Kontaktieren des Elektrodenkopfes (8) der Elektrode (5) mit der Düse (3) des elektrischen Anschlußteiles (1), der zwischen den Elektroden (5, 6) durch die Fügeteile fließende elektrische Strom über deren Stoffwiderstand die Düse (3) des elektrischen Anschlußteiles (1) erwärmt.

7. Verfahren nach einem der Ansprüche 1 bis 6,
dadurch gekennzeichnet,
daß die widerstandserwärmte Düse (3) des elektrischen Anschlußteiles (1) beim Weiterverfahren der Elektrode (5) in Bewegungsrichtung (7) durch die auf diese einwirkende mechanische Kraft zu einer unlösbaren Fügeverbindung umgeformt wird.
